# EUROPÄISCHE PATENTSCHRIFT

(11) **EP 1 430 688 B1**
(45) Veröffentlichungstag und Bekanntmachung des Hinweises auf die Patenterteilung: **08.11.2017**
(21) Anmeldenummer: 02774313.7
(22) Anmeldetag: 09.09.2002
(51) Int. Cl.: H04L 29/06, H04L 29/08, H04L 12/66

(54) **NETZÜBERGANGSEINRICHTUNG UND KOMMUNIKATIONSSYSTEM FÜR ECHTZEITKOMMUNIKATIONSVERBINDUNGEN**
NETWORK GATEWAY DEVICE AND COMMUNICATIONS SYSTEM FOR REAL TIME COMMUNICATION CONNECTIONS
UNITE DE CONNEXION DE RESEAUX ET SYSTEME DE COMMUNICATION POUR LIAISONS DE COMMUNICATION EN TEMPS REEL

(30) Priorität: 25.09.2001 DE 10147148
(43) Veröffentlichungstag der Anmeldung: 23.06.2004
(73) Patentinhaber: Unify GmbH & Co. KG, 80807 München (DE)
(72) Erfinder: MÜLLER, Heribert, A-3730 Eggenburg (AT); TOTZKE, Jürgen, 85586 Poing (DE); MÜLLER, Harald, 82205 Gilching (DE); KLAGHOFER, Karl, 81373 München (DE)
(74) Vertreter: Fritzsche, Thomas
(86) Internationale Anmeldenummer: PCT/DE2002/003345
(87) Internationale Veröffentlichungsnummer: WO 2003/028333

(56) Entgegenhaltungen:
- EP-B1- 1 273 153
- WO-A2-01/78347
- STEPHENS A ET AL: "SIP AND H.323 - INTERWORKING VOIP NETWORKS" BT TECHNOLOGY JOURNAL, BT LABORATORIES, GB, Bd. 19, Nr. 2, 1. April 2001 (2001-04-01), Seiten 119-127, XP001034593 ISSN: 1358-3948
- TAKEI K ET AL: "Design of gateway systern between different signalling protocols of the multimedia session on the internet" PROCEEDINGS OF THE 15TH INTERNATIONAL CONFERENCE ON INFORMATION NETWORKING, JAN 31 - FEB 2, 2001, JAPAN, 31. Januar 2001 (2001-01-31), Seiten 297-302, XP010534287
- SINGH K ET AL: "Interworking Between SIP/SDP and H.323" PROCEEDINGS OF THE IP-TELEPHONY WORKSHOP, XX, XX, 12. April 2000 (2000-04-12), Seiten 1-10, XP002189118
- ACKERMANN R; DARLAGIANNIS V; GOERTZ M; KARSTEN M; STEINMETZ R: "An Open Source H.323-SIP Gateway as Basis for Supplementary Service Interworking" PROCEEDINGS INTERNET TELEPHONY WORKHOP 2001 (IPTEL 2001), APRIL 2ND-3RD, 2001, NEW YORK CITY, USA, 2. April 2001 (2001-04-02), Seiten 1-7, XP002229717
- SHAO H-R ET AL: "User-aware object-based video transmission over the next generation Internet" SIGNAL PROCESSING. IMAGE COMMUNICATION, ELSEVIER SCIENCE PUBLISHERS, AMSTERDAM, NL, Bd. 16, Nr. 8, Mai 2001 (2001-05), Seiten 763-784, XP004249805 ISSN: 0923-5965

## Beschreibung

In zeitgemäßen Kommunikationssystemen werden Echtzeitverbindungen, z.B. zur Sprach-, Video- oder Multimediakommunikation, in zunehmendem Maße auch über paketorientierte Kommunikationsnetze, wie z.B. lokale Netze (LAN: Local Area Network) oder Weitverkehrsnetze (WAN: Wide Area Network), geführt. Auf dieser Technik basiert beispielsweise die sogenannte Internettelefonie, die häufig auch als VoIP-Telefonie (VoIP: Voice/Video-over-Internetprotokoll) bezeichnet wird.

Zum gegenwärtigen Zeitpunkt basiert ein Aufbau von Echtzeitkommunikationsverbindungen über ein paketorientiertes Kommunikationsnetz häufig auf der ITU-T-Empfehlung H.323. Die H.323-Empfehlung beschreibt Echtzeitverbindungen innerhalb eines paketorientierten Kommunikationsnetzes, sowie Echtzeitverbindungen, die von einem paketorientierten Kommunikationsnetz über eine Gatewayeinrichtung in ein leitungsvermitteltes Kommunikationsnetz, z.B. ein ISDN-Netz, und von diesem zu einem externen Verbindungsziel weitervermittelt werden. Falls sich ein jeweiliges externes Verbindungsziel innerhalb eines externen paketorientierten Kommunikationsnetzes befindet, wird die betreffende Echtzeitverbindung über das leitungsvermittelte Kommunikationsnetz zur Gatewayeinrichtung des externen Kommunikationsnetzes und von dort wieder per Paketvermittlung zum externen Verbindungsziel vermittelt.

Hierbei treten jedoch aufgrund des zweifachen Übergangs von Paketvermittlung zu Leitungsvermittlung und wieder zu Paketvermittlung zum Teil erhebliche Einbußen hinsichtlich der Ü-Übertragungsleistung und Sprachqualität auf. Zudem ist beim Übergang zwischen Paket- und Leitungsvermittlung eine aufwändige Protokollumsetzung auf Schicht 3 des OSI-Referenzmodells durchzuführen.

STEPHENS A ET AL: "SIP AND H.323 - INTERWORKING VOIP NETWORKS", BT TECHNOLOGY JOURNAL, BT LABORATORIES, GB, Bd. 19, Nr. 2, 1. April 2001, Seiten 119-127, ISSN: 1358-3948, und TAKEI K ET AL: "Design of gateway system between different signaling protocols of the multimedia session on the internet", PROCEEDINGS OF THE 15TH INTERNATIONAL CONFERENCE ON INFORMATION NETWORKING, JAN 31-FEB 2, 2001, JAPAN, 31. Januar 2001, Seiten 297-302, offenbaren eine Netzübergangseinrichtung gemäß dem Oberbegriff des Anspruchs 1.

SINGH K ET AL: "Interworking Between SIP/SDF and H.323", PROCEEDINGS OF THE IP-TELEPHONY WORKSHOP, 12. April 2000, Seiten 1-10, offenbart eine Netzübergangseinrichtung, bei der eine Nachricht des einen Signalisierungsprotokolls hinsichtlich eines im einem ersten Kommunikationsnetz unterstützten Dienstmerkmals in eine oder mehrere Nachrichten eines anderen Signalisierungsprotokolls in einem zweiten Kommunikationsnetz umgesetzt wird, falls dieses Dienstmerkmal im zweiten Kommunikationsnetz unterstützt wird. Falls dieses Dienstmerkmal im zweiten Kommunikationsnetz jedoch nicht unterstützt wird, ist keine konkrete Vorgehensweise angegeben.

EP 1 273 153 B1 stellt Stand der Technik gemäß Art. 54(3) EPÜ dar und offenbart Telekommunikationssysteme, welche ein Interworking zwischen einem H.323 Protokoll und einem Session Initiation Protocol (SIP) unterstützen.

Es ist Aufgabe der vorliegenden Erfindung, eine Netzübergangseinrichtung sowie ein Kommunikationssystem anzugeben, womit die genannten Nachteile bei Echtzeitkommunikationsverbindungen zwischen unterschiedlichen paketorientierten Kommunikationsnetzen vermieden werden können.

Gelöst wird diese Aufgabe durch eine Netzübergangseinrichtung mit den Merkmalen des Patentanspruchs 1 und ein Kommunikationssystem mit den Merkmalen des Patentanspruchs 7.

Die Erfindung erlaubt es, auf einem paketorientierten Transportprotokoll, wie z.B. dem Internetprotokoll oder anderen Protokollen aus der TCP/IP-Protokollfamilie, basierende Echtzeitkommunikationsverbindungen, z.B. zur Sprach-, Video- und/oder Multimediakommunikation, zwischen Kommunikationsnetzen mit unterschiedlichen Verbindungssteuerprotokollen aufzubauen. Derartige Kommunikationsnetze mit einem auf einem paketorientierten Transportprotokoll aufgesetzten Verbindungssteuerprotokoll, z.B. gemäß der ITU-T-Empfehlung H.323 oder gemäß dem SIP-Standard (SIP: Session Initiation Protocol) des IETF-Forums, werden häufig auch als VoIP-Systeme bezeichnet. VoIP-Systeme können sich hinsichtlich ihrer Verbindungssteuerprotokolle und/oder hinsichtlich verwendeter Nutzdatenkodierverfahren unterscheiden und/oder von unterschiedlichen Betreiben in unterschiedlichen administrativen Domänen verwaltet werden.

An die erfindungsgemäße Netzübergangseinrichtung können unterschiedliche Kommunikationsnetze logisch direkt auf der Ebene des Transportprotokolls angekoppelt werden. Somit tritt bei Echtzeitkommunikationsverbindungen zwischen den angekoppelten Kommunikationsnetzen zumindest logisch kein Medienbruch hinsichtlich des Datentransports und insbesondere kein Übergang zwischen Paket- und Leitungsvermittlung auf. Dies ist insofern sehr vorteilhaft, als sich viele bekannte paketorientierte Methoden zur Dienstgütesicherung bei logisch durchgehendem Datenpakettransport besonders wirkungsvoll einsetzen lassen. Zudem ist keine zusätzliche und sehr aufwändige Umsetzung auf der Ebene des Transportprotokolls wie bei herkömmlichen zwischen Paket- und Leitungsvermittlung umsetzenden Gatewayeinrichtungen erforderlich.

Erfindungsgemäß weist die Netzübergangseinrichtung eine Umsetzeinrichtung zum Umsetzen zwischen den unterschiedlichen Verbindungssteuerprotokollen der angekoppelten Kommunikationsnetze auf. Im Rahmen der Verbindungssteuerprotokolle kann die Umsetzeinrichtung insbesondere zwischen unterschiedlichen Verbindungssignalisierungen, unterschiedlichen Verbindungsaufbausignalisierungen und/oder unterschiedlichen Dienstgütesignalisierungen umsetzen. Da die umzusetzenden Verbindungssteuerprotokolle jeweils auf einem paketorientierten Transportprotokoll basieren, treten in der Regel erheblich weniger Umsetzverluste auf als bei herkömmlichen, zwischen Paket- und Leitungsvermittlung umsetzenden Gatewayeinrichtungen.

Weiterhin kann aufgrund der Umsetzung der Verbindungssteuerprotokolle im Allgemeinen eine aufwändig zu implementierende Kommunikation zwischen Verbindungssteuereinrichtungen der angekoppelten Kommunikationsnetze vermieden werden.

Vorteilhafte Ausführungsformen und Weiterbildungen der Erfindung sind in den abhängigen Ansprüchen angegeben.

Gemäß einer vorteilhaften Weiterbildung der Erfindung kann in der Netzübergangseinrichtung eine physikalische und/oder logische Trennung zwischen einer Signalisierungsübergangseinrichtung zum Umsetzen zwischen den unterschiedlichen Verbindungssteuerprotokollen und einer Nutzdatenübergangseinrichtung zum Umsetzen von im Rahmen der Echtzeitkommunikationsverbindungen zu übertragenden Nutzdaten vorgesehen sein. Die Nutzdatenübergangseinrichtung kann zwischen unterschiedlichen Nutzdatenkodierverfahren, wie beispielsweise gemäß den ITU-T-Empfehlungen G.711, G.723.1, G.729 oder gemäß GSM-Standard (Global System for Mobile Communication), umsetzen. Die logische und/oder physikalische Trennung führt zu einer flexiblen, modularen und damit hochskalierbaren Architektur der Netzübergangseinrichtung. So können beispielsweise auch mehrere anwendungsspezifische Nutzdatenübergangseinrichtungen einer Signalisierungsübergangseinrichtung zugeordnet und/oder durch diese gesteuert werden.

Die Signalisierungsübergangseinrichtung und die Nutzdatenübergangseinrichtung können vorzugsweise mittels des H.248-Protokolls gemäß ITU-T-Empfehlung oder mittels des sogenannten "Media Gateway Control Protocol" (MGCP) gemäß IETF-Standard gekoppelt sein.

Nach einer weiteren vorteilhaften Weiterbildung der Erfindung kann die Netzübergangseinrichtung, vorzugsweise in der Signalisierungsübergangseinrichtung, eine Stellvertretereinrichtung zum Bedienen von Steuer- und/oder Anfragemeldungen aus einem der Kommunikationsnetze in Vertretung für eine an einer Echtzeitkommunikationsverbindung beteiligte Einrichtung eines anderen der Kommunikationsnetze aufweisen. Aufgrund der Stellvertreterfunktionalität der Netzübergangseinrichtung ist seitens einer Verbindungssteuerung eines angekoppelten Kommunikationsnetzes im Allgemeinen keine Sonderbehandlung netzwerkübergreifender Echtzeitkommunikationsverbindungen erforderlich. Erfindungsgemäß ist in der Netzübergreifseinrichtung eine Stellvertretereinrichtung vorgesehen zum Vertreten eines in einem ersten der Kommunikationsnetze unterstützten und in einem zweiten der Kommunikationsnetze nicht unterstützten Dienstmerkmals gegenüber dem ersten Kommunikationsnetz. Weiterhin kann die Netzübergangseinrichtung, vorzugsweise in der Signalisierungsübergangseinrichtung, eine Dienstmerkmal-Übergangseinrichtung zum Umsetzen zwischen unterschiedlichen Dienstmerkmalprotokollen der unterschiedlichen Kommunikationsnetze aufweisen.

Zur Erhöhung der Betriebssicherheit kann die Netzübergangseinrichtung darüber hinaus eine zwischen die Datenschnittstellen geschaltete Firewall-Einrichtung zur Datenverkehrsüberwachung insbesondere auf der Ebene der Verbindungssteuerprotokolle aufweisen.

Gemäß einer weiteren vorteilhaften Weiterbildung der Erfindung kann die Netzübergangseinrichtung, vorzugsweise in der Signalisierungsübergangseinrichtung, eine Adressauflösungseinrichtung zum Austauschen von Adressinformation, wie z.B. Rufnummern, Aliasadressen, E-Mailadressen, Internetadressen und/oder anderen sog. URI (Uniform Resource Identifier), zwischen den angekoppelten Kommunikationsnetzen aufweisen. Ein solcher Austausch von Adressinformation erlaubt es, Datenpakete in einem der angekoppelten Kommunikationsnetze mit einer Adressinformation für ein anderes der Kommunikationsnetze zu versehen.

Darüber hinaus weist die Netzübergangseinrichtung, vorzugsweise in der Signalisierungsübergangseinrichtung, eine Dienstgütesteuerung auf zum Umsetzen von Dienstgüteklassen der Verbindungssteuerprotokolle auf transportprotokollspezifische Dienstgüteklassen. Zu diesem Zweck kann zwischen der Signalisierungsübergangseinrichtung und der Nutzdatenübergangseinrichtung eine Schnittstelle zur Dienstgütesteuerung vorgesehen sein. Eine derartige Schnittstelle kann vorzugsweise mittels eines um ein Dienstgüteinformation-Signalisierungselement erweiterten H.248-Protokolls oder MGCP-Protokolls implementiert werden.

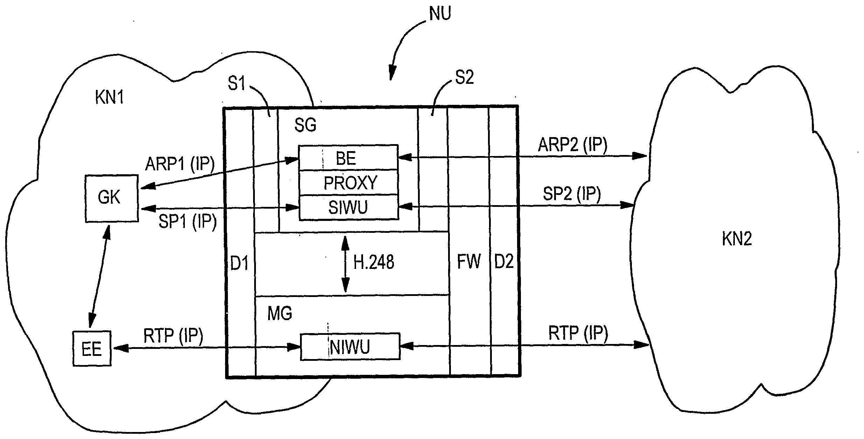

Ein Ausführungsbeispiel der Erfindung wird nachfolgend anhand der Zeichnung näher erläutert.
Die Figur zeigt ein Kommunikationssystem mit zwei über eine Netzwerkübergangseinrichtung gekoppelten, paketorientierten, Kommunikationsnetzen in schematischer Darstellung.

In der Figur ist ein Kommunikationssystem mit zwei über eine Netzübergangseinrichtung NU gekoppelten paketorientierten Kommunikationsnetzen KN1 und KN2 schematisch dargestellt. Die Kommunikationsnetze KN1 und KN2 sind als sogenannte VoIP-Systeme (Voice/Video-over-Internetprotokoll) für Echtzeitkommunikationsverbindungen zur Sprach-, Video- und/oder Multimediakommunikation ausgebildet. Als Transportprotokoll zum Übertragen von Datenpaketen ist in beiden Kommunikationsnetzen KN1 und KN2 das Internetprotokoll IP implementiert.

Während beide Kommunikationsnetze KN1 und KN2 das gleiche Transportprotokoll IP aufweisen, unterscheiden sie sich hinsichtlich ihres Verbindungssteuerprotokolls. Für das vorliegende Ausführungsbeispiel sei angenommen, dass im Kommunikationsnetz KN1 ein Signalisierungsprotokoll SP1 gemäß der ITU-T-Empfehlung H.323 und im Kommunikationsnetz KN2 ein sich vom Signalisierungsprotokoll SP1 unterscheidendes Signalisierungsprotokoll SP2 als Verbindungssteuerprotokolle implementiert sind. Das Signalisierungsprotokoll SP2 kann beispielsweise ein sogenanntes SIP-Protokoll (Session Initiation Protocol) gemäß IETF-Forum oder ein H.323-Protokoll sein, das sich vom Signalisierungsprotokoll SP1 durch eine unterschiedliche H.323-Version, eine unterschiedliche H.323-Implementierung und/oder unterschiedliche H.323-Verbindungsaufbauoptionen unterscheidet. Die Signalisierungsprotokolle SP1 und SP2 sind jeweils auf dem Transportprotokoll IP aufgesetzt. Im Rahmen einer Verbindungssteuerung dienen die Signalisierungsprotokolle SP1 und SP2 insbesondere zur Verbindungssignalisierung, Verbindungsaufbausignalisierung, Dienstmerkmalsignalisierung (z.B. Anrufumleitung, Rufübergabe) und/oder Dienstgütesignalisierung.

Typischerweise kann das Kommunikationsnetz KN1 ein privates Unternehmensnetz (Enterprise Network) und das Kommunikationsnetz KN2 ein Netzwerk eines Netzbetreibers (Carrier Network) oder ein weiteres, externes Unternehmensnetz sein.

Zum Echtzeittransport von im Rahmen von Echtzeitkommunikationsverbindungen zu übertragenden Nutzdaten ist in beiden Kommunikationsnetzen KN1 und KN2 jeweils ein Echtzeitprotokoll RTP (Real Time Protocol) implementiert. Das Echtzeitprotokoll RTP setzt auf dem sogenannten UDP-Protokoll (User Datagramm Protocol) und dieses wiederum auf dem Internetprotokoll IP auf. Nach einer einfacheren Ausgestaltungsvariante können die Nutzdaten anstatt über das Echtzeitprotokoll RTP auch direkt über das Internetprotokoll IP übertragen werden.

Das Kommunikationsnetz KN1 weist eine Kommunikationsendeinrichtung EE, wie z.B. ein Endgerät, einen Personalcomputer, eine Kommunikationsanwendung oder einen Kommunikationsclient, sowie eine Verbindungssteuerung GK, wie z.B. einen sogenannten Gatekeeper gemäß H.323-Empfehlung, auf. Ein Aufbau einer Echtzeitkommunikationsverbindung von oder zu der Kommunikationsendeinrichtung EE wird mittels einer - in der Figur durch einen Doppelpfeil angedeuteten - Signalisierung zwischen der Kommunikationsendeinrichtung EE und der Verbindungssteuerung GK veranlasst. Außer zur Verbindungskontrolle dient die Verbindungssteuerung GK auch zur kommunikationsnetzinternen Adressauflösung, d.h. zum Umsetzen zwischen Endeinrichtungsadressen, wie z.B. Telefonnummern oder Aliasnamen, und Internetprotokolladressen von Verbindungspartnern. Beim Hochlauf der Netzübergangseinrichtung NU registriert sich diese bei der Verbindungssteuerung GK, vorzugsweise durch RAS-Signalisierung (RAS: Registration Access Status) gemäß der ITU-T-Empfehlung H.225.0.

Die Netzübergangseinrichtung NU verfügt über eine transportprotokollbasierte, hier internetprotokollbasierte Datenschnittstelle D1, über die das Kommunikationsnetz KN1 angekoppelt ist, und eine transportprotokollbasierte, hier internetprotokollbasierte Datenschnittstelle D2, über die das Kommunikationsnetz KN2 angekoppelt ist. Da die Kommunikationsnetze KN1 und KN2 mittels des gleichen Transportprotokolls IP logisch direkt an die Netzübergangseinrichtung angekoppelt sind, tritt zumindest logisch kein für die Verbindungsqualität nachteiliger Medienbruch auf. Insbesondere ist keine Umsetzung auf der Transportschicht oder der Netzwerkschicht erforderlich, wodurch sich die Architektur der Netzwerkübergangseinrichtung NU erheblich vereinfacht.

Die Netzübergangseinrichtung NU weist weiterhin eine an die Datenschnittstelle D2 gekoppelte Firewall-Einrichtung FW zur Überwachung des vom Kommunikationsnetz KN2 kommenden Datenverkehrs auf. Die Firewall-Einrichtung FW dient dem Zweck, nur dazu berechtigten Datenpaketen, z.B. nur Datenpaketen bestimmter Anwendungen, Zugang zum Kommunikationsnetz KN1 zu ermöglichen. Im vorliegenden Ausführungsbeispiel ist die Firewall-Einrichtung FW so ausgestaltet, dass im Rahmen von Echtzeitkommunikationsverbindungen zwischen den Kommunikationsnetzen KN1 und KN2 auszutauschende Datenpakete die Firewall-Einrichtung FW passieren können. Derartig ausgestaltete Firewall-Einrichtungen werden häufig auch als VoIP-fähig - oder spezifischer als SIP- oder H.323-fähig bezeichnet. Die Firewall-Einrichtung FW kann vorzugsweise als spezifische Funktion der Netzübergangseinrichtung NU ausgebildet sein. Alternativ dazu kann eine VoIP-fähige Firewall-Einrichtung auch mittels eines sogenannten Firewall-Control-Protokolls realisiert werden. In einem solchen Fall erfolgt die Steuerung der eigentlichen Firewall-Einrichtung durch eine sogenannte Firewall-Control-Funktion in der Netzübergangseinrichtung NU oder in der Verbindungssteuerung GK. Die Firewall-Einrichtung FW kann vorzugsweise eine sogenannte NAT-Funktionalität (Network Address Translation) bereitstellen, was eine Umsetzung zwischen nur im Kommunikationsnetz KN1 gültigen, internen Internetprotokolladressen und außerhalb des Kommunikationsnetzes KN1 gültigen Internetprotokolladressen erlaubt.

Die Netzübergangseinrichtung NU weist als Funktionskomponenten eine Signalisierungsübergangseinrichtung SG, häufig auch als Signalling-Gateway bezeichnet, sowie eine davon logisch und oder physikalisch getrennte Nutzdatenübergangseinrichtung MG, häufig auch als Media-Gateway bezeichnet auf. Die Nutzdatenübergangseinrichtung MG wird durch die Signalisierungsübergangseinrichtung SG mittels eines sogenannten Media-Gateway-Control-Protokolls gemäß ITU-T-Empfehlung H.428, gegebenenfalls erweitert um Dienstgütesignalisierungselemente, gesteuert. Diese Kopplung zwischen Signalisierungsübergangseinrichtung SG und Nutzdatenübergangseinrichtung MG ist in der Figur durch einen Doppelpfeil angedeutet.

Die Nutzdatenübergangseinrichtung MG ist über die Datenschnittstelle D1 mit dem Kommunikationsnetz KN1 und über die Firewall-Einrichtung FW und die Datenschnittstelle D2 logisch mit dem Kommunikationsnetz KN2 gekoppelt. Die Nutzdatenübergangseinrichtung MG enthält eine Nutzdatenumsetzeinrichtung NIWU zum Umsetzen zwischen unterschiedlichen Nutzdatenkodierungen. Eine derartige Umsetzung ist bei Echtzeitkommunikationsverbindungen zwischen einer Endeinrichtung, hier EE, des Kommunikationsnetzes KN1 und dem Kommunikationsnetz KN2 erforderlich, falls die Kommunikationsnetze KN1 und KN2 keine gemeinsame Nutzdatenkodierung, wie z.B. gemäß ITU-T-Standard G.711, G.723.1 etc., aufweisen. In einem solchen Fall sind im Rahmen der Echtzeitkommunikationsverbindungen zu übertragende Nutzdaten von der Endeinrichtung EE mittels des Echtzeitprotokolls RTP zur Nutzdatenumsetzeinrichtung NIWU zu übertragen, wo die Nutzdaten in eine im Kommunikationsnetz KN2 verwendete Nutzdatenkodierung umgesetzt und mittels des Echtzeitprotokolls RTP in das Kommunikationsnetz KN2 weitergeleitet werden. Eine entsprechende Konvertierung ist bei in umgekehrter Richtung zu übertragenden Nutzdaten erforderlich. Falls dagegen in beiden Kommunikationsnetzen KN1 und KN2 eine gemeinsame Nutzdatenkodierung bereitgestellt wird, können die Nutzdatenpakete unter Umgehung der Nutzdatenumsetzeinrichtung NIWU, direkt zwischen den an der Echtzeitkommunikationsverbindung beteiligten Endeinrichtungen per Echtzeitprotokoll RTP bzw. Internetprotokoll IP übermittelt werden.

Die Signalisierungsübergangseinrichtung SG ist über eine auf dem Signalisierungsprotokoll SP1 basierende Signalisierungsschnittstelle S1, die auf der Datenschnittstelle D1 aufsetzt, an das Kommunikationsnetz KN1 und über eine auf dem Signalisierungsprotokoll SP2 basierende Signalisierungsschnittstelle S2, die über die Firewall-Einrichtung FW auf der Datenschnittstelle D2 aufsetzt an das Kommunikationsnetz KN2 gekoppelt. Die Signalisierungsübergangseinrichtung SG weist als - vorzugsweise austauschbare - Funktionsmodule eine Umsetzeinrichtung SIWU zum Umsetzen zwischen den Signalisierungsprotokollen SP1 und SP2, eine Stellvertretereinrichtung PROXY, sowie eine Adressauflösungseinrichtung BE zur kommunikationsnetzübergreifenden Adressauflösung auf.

Die Umsetzeinrichtung SIWU dient im vorliegenden Ausführungsbeispiel zum logisch direkten Umsetzen zwischen einer Verbindungssignalisierung gemäß dem Signalisierungsprotokoll SP1, hier ein H.323-Protokoll, und einer Verbindungssignalisierung gemäß dem Signalisierungsprotokoll SP2, hier ein H.323- oder ein SIP-Protokoll, auf der Ebene der Anwendungsschicht des OSI-Referenzmodells. Hierbei wird insbesondere eine Verbindungsaufbausignalisierung, eine Dienstmerkmalsignalisierung und eine Dienstgütesignalisierung umgesetzt.

Im vorliegenden Ausführungsbeispiel wird die Verbindungssignalisierung gemäß dem Signalisierungsprotokoll SP1 von der Verbindungssteuerung GK über die Datenschnittstelle D1 und die Signalisierungsschnittstelle S1 zur Umsetzeinrichtung SI-WU übermittelt, wo eine Umsetzung in die Verbindungssignalisierung gemäß dem Signalisierungsprotokoll SP2 erfolgt. Diese umgesetzte Verbindungssignalisierung über die Signalisierungsschnittstelle S2, die Firewall-Einrichtung FW und die Datenschnittstelle D2 in das Kommunikationsnetz KN1 übermittelt. Eine Übermittlung und Umsetzung einer Verbindungssignalisierung vom Kommunikationsnetz KN2 zur Verbindungssteuerung GK erfolgt analog in umgekehrter Richtung.

Die Stellvertretereinrichtung PROXY dient im wesentlichen dazu, Steuer- und/oder Anfragemeldungen der Verbindungssteuerung GK in Vertretung für einen Verbindungspartner der Endeinrichtung EE zu bedienen. Insbesondere wird eine Dienstmerkmalsignalisierung der Verbindungssteuerung GK, z.B. gemäß der ITU-T-Empfehlung H.450, durch die Stellvertretereinrichtung PROXY logisch terminiert, falls ein entsprechendes Dienstmerkmal im Kommunikationsnetz KN2 nicht unterstützt wird. Sofern Dienstmerkmale im Kommunikationsnetz KN2 im Rahmen des Signalisierungsprotokolls SP2 auf andere Weise als im Kommunikationsnetz KN1 signalisiert werden, führt die Umsetzeinrichtung SIWU eine Umsetzung zwischen den unterschiedlichen Dienstmerkmalssignalisierungen der Kommunikationsnetze KN1 und KN2 durch. Durch die Umsetzung der Signalisierungsprotokolle SP1 und SP2 und insbesondere eventuell unterschiedlicher Dienstmerkmalssignalisierungen durch die Signalisierungsübergangseinrichtung SG kann eine ansonsten nur mit großem Aufwand implementierbare Kommunikation zwischen der Verbindungssteuerung GK des Kommunikationsnetzes KN1 und einer entsprechenden Verbindungssteuerung (nicht dargestellt) des Kommunikationsnetzes KN2 vermieden werden.

Die Adressauflösungseinrichtung BE dient zum netzübergreifenden Austausch von Adressinformation zwischen den Kommunikationsnetzen KN1 und KN2 und ist vorzugsweise als sogenanntes Border-Element gemäß der ITU-T-Empfehlung H.225.0 Annex G ausgebildet. Zum Aufbau einer Echtzeitkommunikationsverbindung von der Endeinrichtung EE in das Kommunikationsnetz KN2 wird durch die Verbindungssteuerung GK aus einer an der Endeinrichtung EE eingegebenen Zielrufnummer eine Ziel-IP-Adresse abgeleitet (IP: Internet-Protokoll). Zu diesem Zweck ist es erforderlich, dass die Verbindungssteuerung GK über die Adressauflösungseinrichtung BE mit dem Kommunikationsnetz KN2 Adressinformation austauscht. So kann beispielsweise bei jedem Verbindungsaufbau eine jeweilige Ziel-IP-Adresse beim Kommunikationsnetz KN2 abgefragt werden. Alternativ dazu kann ein solcher Austausch auch rufunabhängig erfolgen.

Zum Zwecke des Austauschs von Adressinformation kommuniziert die Verbindungssteuerung GK mittels eines internetprotokollbasierten Adressauflösungsprotokolls ARP1 über die Datenschnittstelle D1 und die Signalisierungsschnittstelle S1 mit der Adressauflösungseinrichtung BE, die wiederum mittels eines internetprotokollbasierten Adressauflösungsprotokolls ARP2 mit dem Kommunikationsnetz KN2 kommuniziert. Das Adressauflösungsprotokoll ARP1 kann vorzugsweise gemäß der ITU-T-Empfehlung H.225.0 Annex G ausgestaltet sein. Sofern das Kommunikationsnetz KN2 ein H.323-Protokoll unterstützt kann das Adressauflösungsprotokoll ARP2 ebenfalls gemäß der ITU-T-Empfehlung H.225.0 Annex G realisiert sein. Falls das Kommunikationsnetz KN2 dagegen das SIP-Protokoll unterstützt, kann auch ein DNS-artiges Protokoll (DNS: Domain Name System) oder das sogenannte TRIP-Protokoll als Adressauflösungsprotokoll ARP2 verwendet werden.

Die Netzübergangseinrichtung NU kann physikalisch auf unterschiedliche Weise, z.B. mittels Ethernet, xDSL (x Digital Subscriber Line), Frame Relay, ISDN, ATM, etc. an das Kommunikationsnetz KN2 gekoppelt sein. Die entsprechenden physikalischen Zugriffsmittel können optional von der Netzübergangseinrichtung NU oder durch externe Netzwerkeinrichtungen, wie z.B. sogenannte Access-Router bereitgestellt werden.

Ungeachtet der physikalischen Anbindung besteht jedoch logisch eine direkte internetprotokollbasierte Ankopplung des Kommunikationsnetzes KN2 an die Netzübergangseinrichtung NU. Die Verwendung der erfindungsgemäßen Netzübergangseinrichtung NU zur logisch direkten Kopplung unterschiedlicher VoIP-Systeme auf der Ebene des Transportprotokolls IP vermeidet einen für die Verbindungsqualität nachteiligen Medienbruch.

Weiterhin kann die Netzübergangseinrichtung NU - insbesondere bei Ankopplung von drei oder mehr Kommunikationsnetzen - als Multipunkt-Konferenzeinheit eingesetzt werden. Zu diesem Zweck kann die Netzübergangseinheit um eine Mischfunktion zum Mischen und Verteilen von Nutzdatenströmen erweitert werden.

## Patentansprüche

1. Netzübergangseinrichtung (NU) für auf einem paketorientierten Transportprotokoll basierende Echtzeitkommunikationsverbindungen zwischen einem ersten Kommunikationsnetz (KN1) mit einem auf dem Transportprotokoll aufgesetzten, ersten Verbindungssteuerprotokoll (SP1) und einem zweiten Kommunikationsnetz (KN2) mit einem auf dem Transportprotokoll aufgesetzten, zweiten Verbindungssteuerprotokoll (SP2), mit
a) einer ersten (D1) und einer zweiten (D2) transportprotokollbasierten Datenschnittstelle zum auf der Ebene des Transportprotokolls logisch direkten Ankoppeln des ersten (KN1) und des zweiten (KN2) Kommunikationsnetzes,
b) einer auf dem ersten Verbindungssteuerprotokoll (SP1) basierenden, mit der ersten Datenschnittstelle (D1) gekoppelten, ersten Signalisierungsschnittstelle (S1) und einer auf dem zweiten Verbindungssteuerprotokoll (SP2) basierenden, mit der zweiten Datenschnittstelle (D2) gekoppelten, zweiten Signalisierungsschnittstelle (S2),
c) einer mit der ersten (S1) und der zweiten (S2) Signalisierungsschnittstelle gekoppelten Umsetzeinrichtung (SIWU) zum Umsetzen zwischen dem ersten (SP1) und dem zweiten (SP2) Verbindungssteuerprotokoll,
und
d) eine Stellvertretereinrichtung (PROXY) zum Vertreten eines im ersten Kommunikationsnetz (KN1) unterstützten und im zweiten Kommunikationsnetz (KN2) nicht unterstützten Dienstmerkmals gegenüber dem ersten Kommunikationsnetz (KN1), und zum logischen Terminieren einer Dienstmerkmalsignalisierung, falls das betreffende Dienstmerkmal im zweiten Kommunikationsnetz (KN2) nicht unterstützt wird,
e) wobei das erste Verbindungssteuerprotokoll (SP1) mittels eines Protokolls gemäß der ITU-T-Empfehlung H.323 und das zweite Verbindungssteuerprotokoll (SP2) mittels eines SIP-Protokolls (Session Initiation Protocol) des IETF-Forums realisiert ist, oder
wobei das erste Verbindungssteuerprotokoll (SP1) mittels des SIP-Protokolls des IETF-Forums und das zweite Verbindungssteuerprotokoll (SP2) mittels des Protokolls gemäß der ITU-T-Empfehlung H.323 realisiert ist,
**gekennzeichnet durch**
eine Dienstgütesteuerung zum Umsetzen von Dienstgüteklassen der Verbindungssteuerprotokolle auf transportprotokollspezifische Dienstgüteklassen.

2. Netzübergangseinrichtung nach Anspruch 1, **gekennzeichnet durch** eine logische und/oder physikalische Trennung in eine Signalisierungsübergangseinrichtung (SG) zum Umsetzen zwischen dem ersten (SP1) und dem zweiten (SP2) Verbindungssteuerprotokoll und
eine Nutzdatenübergangseinrichtung (MG) zum Umsetzen von im Rahmen der Echtzeitkommunikationsverbindungen zu übertragenden Nutzdaten.

3. Netzübergangseinrichtung nach Anspruch 2, **dadurch gekennzeichnet, dass** die Signalisierungsübergangseinrichtung (SG) und die Nutzdatenübergangseinrichtung (MG) mittels des sog. H. 248 Protokolls gemäß ITU-T-Empfehlung oder mittels des sog. Media Gateway Control Protocol, MGCP, gemäß IETF-Standard gekoppelt sind.

4. Netzübergangseinrichtung nach einem der vorhergehenden Ansprüche, **gekennzeichnet durch** eine Dienstmerkmal-Übergangseinrichtung (SIWU) zum Umsetzen zwischen unterschiedlichen Dienstmerkmal-Protokollen des ersten (KN1) und zweiten (KN2) Kommunikationsnetzes.

5. Netzübergangseinrichtung nach einem der vorhergehenden Ansprüche, **gekennzeichnet durch** eine zwischen die Datenschnittstellen (D1, D2) geschaltete Firewall-Einrichtung (FW) zur Datenverkehrsüberwachung insbesondere auf der Ebene der Verbindungssteuerprotokolle (SP1, SP2).

6. Netzübergangseinrichtung nach einem der vorhergehenden Ansprüche, **gekennzeichnet durch** eine Adressauflösungseinrichtung (BE) zum Austauschen von Adressinformation zwischen dem ersten (KN1) und dem zweiten (KN2) Kommunikationsnetz.

7. Kommunikationssystem mit mehreren, durch eine Netzübergangseinrichtung (NU) nach einem der vorhergehenden Ansprüche gekoppelten Kommunikationsnetzen (KN1, KN2) mit unterschiedlichen, auf ein paketorientiertes Transportprotokoll aufgesetzten Verbindungssteuerprotokollen (SP1, SP2).

8. Kommunikationssystem nach Anspruch 7, **dadurch gekennzeichnet, dass** durch die Netzübergangseinrichtung zwei private Unternehmensnetze oder zwei Netzbetreibernetze oder ein privates Unternehmensnetz und ein Netzbetreibernetz miteinander gekoppelt sind.

## Claims

1. A network gateway device (NU) for real time communication connections based on a packet-oriented transport protocol between a first communication network (KN1) with a first connection control protocol (SP1) set on the transport protocol and with a second communication network (KN2) with a second connection control protocol (SP2) set on the transport protocol, with
a) a first (D1) and a second (D2) data interface based on a transport protocol for coupling the first (KN1) and the second (KN2) communication network logically directly on the plane of the transport protocol,
b) a first signaling interface (S1) based on the first connection control protocol (SP1) and coupled to the first data interface (D1) and with a second signaling interface (S2) based on the second connection control protocol (SP2) and coupled to the second data interface (D2),
c) a conversion device (SIWU) coupled to the first (S1) and the second (S2) signaling interface for converting between the first (SP1) and the second (SP2) connection control protocol, and
d) a proxy device (PROXY) for representing a service feature supported in the first communication network (KN1) and not represented in the second communication network (KN2) to the first communication network (KN1) and to the logical termination of a service feature signal if the service feature concerned is not supported in the second communication network (KN2),
e) wherein the first connection control protocol (SP1) is realized by a protocol according to the ITU-T recommendation H. 323 and the second connection control protocol (SP2) is realized by an SIP protocol (Session Initiation Protocol) of the IETF forum, or wherein the first connection control protocol (SP1) is realized by the SIP protocol of the IETF forum and the second connection control protocol (SP2) is realized by the protocol according to the ITU recommendation H.323, **characterized by**
a service quality control for converting service quality classes of the connection control protocols to transport protocol-specific service quality classes.

2. The network gateway device according to Claim 1, **characterized by** a logical and/or physical separation into a signaling gateway device (SG)for converting between the first (SP1) and the second (SP2) connection control protocol and by a payload gateway device (MG) for converting payloads to be transmitted in the framework of the real-time communication connections.

3. The network gateway device according to Claim 2, **characterized in that** the signaling gateway device (SG) and the payload gateway device (MG) are coupled by the so-called H.248 protocol according to the ITU-T recommendation or by the so-called Media Gateway Control Protocol, MGCP according to the IETF standard.

4. The network gateway device according to one of the previous claims, **characterized by** a service feature gateway device (SEWU) for converting between different service feature protocols of the first (KN1) and of the second (KN2) communication network.

5. The network gateway device according to one of the previous claims, **characterized by** a firewall device (FW) connected between the data interfaces (D1, D2) for the monitoring of data traffic, at the level of the connection control protocols (SP1, SP2).

6. The network gateway device according to one of the previous claims, **characterized by** an address resolution device (BE) for exchanging address information between the first (KN1) and the second (KN2) communication network.

7. A communication system with several communication networks (KN1, KN2) coupled by a network gateway device (NU) according to one of the previous claims and with different connection control protocols (SP1, SP2) set on a packet-oriented transport protocol.

8. The communication system according to 7, **characterized in that** two private company networks or two network operator networks or one private company network and one network operator network are coupled to one another.

## Revendications

1. Unité de transmission de réseau (NU) pour des liaisons de communication en temps réel basées sur un protocole de transport orienté paquets entre un premier réseau de communication (KN1) avec un premier protocole de commande de liaison (SP1) superposé au protocole de transport et un second réseau de communication (KN2) avec un second protocole de commande de liaison (SP2) superposé au protocole de transport, comprenant :
a) une première (D1) et une seconde (D2) interface de données, basées sur un protocole de transport et destinées au couplage direct de manière logique au niveau du protocole de transport du premier (KN1) et du second (KN2) réseau de communication,
b) une première interface de signalisation (S1) basée sur le premier protocole de commande de liaison (SP1), couplée à la première interface de données (D1) et une seconde interface de signalisation (S2) basée sur le second protocole de commande de liaison (SP2), couplée à la seconde interface de données (D2),
c) une unité de conversion (SIWU) couplée à la première (S1) et à la seconde (S2) interface de signalisation pour la conversion entre le premier (SP1) et le second (SP2) protocole de commande de liaison, et
d) une unité mandataire (PROXY) pour la médiation d'une caractéristique de service prise en charge dans le premier réseau de communication (KN1) et non prise en charge dans le second réseau de communication (KN2) par rapport au premier réseau de communication (KN1), et pour la terminaison logique d'une signalisation de caractéristique de service, si la caractéristique de service concernée n'est pas prise en charge dans le second réseau de communication (KN2),
e) dans laquelle le premier protocole de commande de liaison (SP1) est réalisé au moyen d'un protocole selon la recommandation H.323 de l'ITU-T et le second protocole de commande de liaison (SP2) au moyen d'un protocole SIP (protocole d'ouverture de session) du forum IETF, ou
dans laquelle le premier protocole de commande de liaison (SP1) est réalisé au moyen du protocole SIP du forum IETF et le second protocole de commande de liaison (SP2) au moyen du protocole selon la recommandation H.323 de l'ITU-T,
**caractérisée par**
une commande de qualité de service pour la conversion de classes de qualité de service des protocoles de commande de liaison à des classes de qualité de service spécifiques au protocole de transport.

2. Unité de transmission de réseau selon la revendication 1, **caractérisée par** une séparation logique et/ou physique dans une unité de transmission de signalisation (SG) pour la conversion entre le premier (SP1) et le second (SP2) protocole de commande de liaison et
une unité de transmission de données utiles (MG) pour la conversion de données utiles à transmettre dans le cadre des liaisons de communication en temps réel.

3. Unité de transmission de réseau selon la revendication 2, **caractérisée en ce que** l'unité de transmission de signalisation (SG) et l'unité de transmission de données utiles (MG) sont couplées au moyen du protocole dit H. 248 selon la recommandation de l'ITU-T ou au moyen du protocole dit de commande de passerelle multimédia, MGCP, selon la norme IETF.

4. Unité de transmission de réseau selon l'une quelconque des revendications précédentes, **caractérisée par** une unité de transmission de caractéristique de service (SIWU) pour la conversion entre des protocoles différents de caractéristique de service du premier (KN1) et du second (KN2) réseau de communication.

5. Unité de transmission de réseau selon l'une quelconque des revendications précédentes, **caractérisée par** une unité pare-feu (FW) installée entre les interfaces de données (D1, D2) pour la surveillance du trafic de données au niveau des protocoles de commande de liaison (SP1, SP2).

6. Unité de transmission de réseau selon l'une quelconque des revendications précédentes, **caractérisé par** une unité de résolution d'adresse (BE) destinée à l'échange d'informations d'adresse entre le premier (KN1) et le second (KN2) réseau de communication.

7. Système de communication avec plusieurs réseaux de communication (KN1, KN2) couplés par une unité de transmission de réseau (NU) selon l'une quelconque des revendications précédentes, avec différents protocoles de commande de liaison (SP1, SP2) superposés à un protocole de transport orienté paquets.

8. Système de communication selon la revendication 7, **caractérisé en ce que** deux réseaux privés d'entreprise ou deux réseaux d'opérateurs de réseau ou un réseau privé d'entreprise et un réseau d'opérateur de réseau sont couplés par l'unité de transmission de réseau.
